# EUROPÄISCHE PATENTANMELDUNG

(11) **EP 2 365 131 A1**
(43) Veröffentlichungstag der Anmeldung: **14.09.2011**
(21) Anmeldenummer: 11158057.7
(22) Anmeldetag: 14.03.2011
(51) Int. Cl.: D21H 21/16, D21H 21/34

(54) **Verfahren zum Imprägnieren eines Werkstoffs, imprägnierter Werkstoff und Leichtbauplatte**

(30) Priorität: 12.03.2010 DE 102010015946
(71) Anmelder: Wiederschein, Peter, 64291 Darmstadt (DE); Wiederschein, Michael, 64291 Darmstadt (DE)
(72) Erfinder: Wiederschein, Peter, 64291 Darmstadt (DE); Wiederschein, Michael, 64291 Darmstadt (DE)
(74) Vertreter: Katscher Habermann Patentanwälte

(57) **Zusammenfassung**

Bei einem Verfahren zum Imprägnieren eines entflammbaren oder wasserempfindlichen Werkstoffs mit einem flüssigen Imprägnierungsmittel wird der Werkstoff mindestens einmal mit dem Imprägnierungsmittel getränkt, bis das Imprägnierungsmittel den Werkstoff im Wesentlichen homogen durchdrungen und sich im Wesentlichen homogen innerhalb des Werkstoffs angelagert hat. Es wird eine wechselnde Druckbeaufschlagung vor und/oder während des Tränkens durchgeführt. Der Werkstoff kann vor dem Tränken mit dem Imprägnierungsmittel mit grenzflächenaktiven Substanzen vorbehandelt werden. Die Gesamtaufnahme des Imprägnierungsmittels wird in Abhängigkeit von den angestrebten Eigenschaften des imprägnierten Werkstoffs vorgegeben. Der imprägnierte Werkstoff weist einen Feststoffanteil des Imprägnierungsmittels von mehr als 50 Gewichtsprozent, vorzugsweise von mehr als 60 Gewichtsprozent des imprägnierten Werkstoffes auf. Eine Leichtbauplatte (1) besteht aus einer entflammbaren und/oder wasserempfindlichen Werkstoffplatte (2) besteht, die mit dem vorangehend genannten Verfahren mit einem Imprägnierungsmittel imprägniert wurde.

## Beschreibung

Die Erfindung betrifft ein Verfahren zum Imprägnieren eines entflammbaren oder wasserempfindlichen Werkstoffs mit einem flüssigen Imprägnierungsmittel.

Aus der Praxis ist es bekannt, dass beispielsweise entflammbare Werkstoffe wie Papier-, Pappe- oder holzhaltige Werkstoffe mit einem geeigneten Imprägnierungsmittel behandelt bzw. darin getränkt werden können, um das ursprünglich leicht entflammbare Material mit feuerhemmenden Eigenschaften auszustatten. Die Imprägnierung eines Ausgangsmaterials kann auch dazu dienen, dem imprägnierten Werkstoff wasserabweisende Eigenschaften zu verleihen. Es ist ebenfalls bekannt, durch eine Imprägnierung eines Werkstoffs eine Faserverstärkung oder mit anderen Mitteln dessen mechanische Belastbarkeit und Stabilität zu erhöhen.

Werkstoffe aus Recyclingpapier bieten vielfache Vorteile in der Verwendung. Besonders vorteilhaft ist dabei neben dem geringen Eigengewicht der Werkstoffe deren hohe Verfügbarkeit zu geringen Kosten in Verbindung mit einer Schonung von Umweltresourcen. Werkstoffe aus Recyclingpapier bieten vielfache Vorteile in der Verwendung. Besondere vorteilhaft ist das geringe Eigengewicht und die Möglichkeit der einfacheren Bearbeitung als bei Vollholz- /Holzwerkstoffen und Kunststoffen mit den gebräuchlichen Maschinen und Werkzeugen der Holzbearbeitung bei gleichzeitiger hoher Stabilität. Derartige Werkstoffe können auch als Verbundwerkstoffe im Bereich Automotive beispielsweise als Kernmaterial für Innenverkleidungsteile und Kofferraumböden verwendet werden. Besondere Vorteile ergeben sich auch im Bereich Verpackung und Logistik, wo derartige Werkstoffe Einsatz finden als Paletten, Lagerplatten oder Schutzbehälter. Allerdings ist die Verwendungsbreite derartiger Werkstoffe derzeit erheblich eingeschränkt, sofern feuerhemmende oder wasserabweisende Eigenschaften wichtig sind oder beispielsweise auf Grund von gesetzlichen Vorschriften gewährleistet werden müssen.

Ein Verfahren zur Herstellung eines schwer entflammbaren flächigen Papier- oder Pappwerkstoffs ist beispielsweise aus EP 1 666 665 A1 bekannt. Auf eine aus Papierpulpe gebildete Papierbahn wird eine übersättigte Boraxlösung aufgebracht. Die sich ergebenden feuerhemmenden Eigenschaften des mit der übersättigten Boraxlösung behandelten Papierwerkstoffs sind beispielsweise von der Zusammensetzung und den Eigenschaften des unbehandelten Papierwerkstoffs abhängig. Um sicherstellen zu können, dass der mit der übersättigten Boraxlösung getränkte oder anderweitig beschichtete Papierwerkstoff die für eine vorgegebene Feuerwiderstandsklasse erforderlichen feuerhemmenden Eigenschaften aufweist, muss dem Papierwerkstoff üblicherweise eine in den meisten Fällen übermäßig große Menge an Boraxlösung zugeführt werden, so dass erhebliche und oftmals unnötige Kosten für die Imprägnierung anfallen.

Die derzeit bekannten Imprägnierungsverfahren, bei denen ein fester Werkstoff in ein flüssiges Imprägnierungsmittel eingetaucht bzw. darin getränkt wird oder mit dem Imprägnierungsmittel besprüht oder bestrichen wird, entsteht regelmäßig eine auf die Oberfläche des Werkstoffs aufgetragene Beschichtung oder eine äußere Schicht des Werkstoffs, welche die gewünschten feuerhemmenden oder wasserfesten Eigenschaften aufweist. Wird diese äußere Schicht bzw. Beschichtung beschädigt, so ist der Werkstoff im Bereich der Beschädigung nicht mehr ausreichend imprägniert. Eine beschädigte Imprägnierungsschicht führt jedoch regelmäßig dazu, dass der mit dem Imprägnierungsmittel beschichte Werkstoff grundsätzlich nicht mehr die mit der Imprägnierung angestrebten Eigenschaften aufweist und deshalb nicht bestimmungsgemäß verwendet werden kann, da im Bereich der Beschädigung beispielsweise Wasser eindringen und in das ungeschützte Innere des Werkstoffs gelangen kann oder aber unter Hitzeeinwirkung durch die beschädigte Beschichtung hindurch der in seinem Inneren ungeschützte Werkstoff in Brand gesetzt werden kann.

Die mit einem Imprägnierungsmittel beschichteten Werkstoffe können nach ihrer Imprägnierung nicht mehr in ihrer Formgebung verändert und beispielsweise zugeschnitten oder mit Löchern versehen werden. Die Verwendungsmöglichkeiten für derartig imprägnierte Werkstoffe sind deshalb stark eingeschränkt.

Es sind ebenfalls beispielsweise aus DE 600 21 616 T2 Verfahren zur Herstellung eines wasserfesten Werkstoffs bekannt, bei denen ein wasserabstoßender Zusatzstoff in die Pulpe eingebracht und anschließend aus dieser Pulpe Wellpappe oder andere Werkstoffe hergestellt werden. Bei derartigen Verfahren weist der mit wasserfesten oder feuerhemmenden Zusatzstoffen hergestellte Werkstoff keine äußere Schicht oder Beschichtung mit einem Imprägnierungsmittel auf. Der Werkstoff kann beliebig weiter verarbeitet werden und verliert auch bei einer Beschädigung seiner Außenhaut bzw. seiner Oberfläche die durch die Zusatzstoffe vermittelten Eigenschaften nicht.

Es hat sich jedoch gezeigt, dass die feuerhemmenden oder wasserfesten Zusatzstoffe oftmals in einer hohen Konzentration beigefügt werden müssen, um die angestrebten feuerhemmenden oder wasserfesten Eigenschaften des auf diese Weise hergestellten Werkstoffs gewährleisten zu können. Eine nachträgliche Anpassung der angestrebten feuerhemmenden oder wasserfesten Eigenschaften ist regelmäßig nicht mehr möglich und bestenfalls durch eine nachträgliche zusätzliche Beschichtung bzw. Tränkung des Werkstoffs denkbar. Es hat sich weiterhin gezeigt, dass durch die hohe Konzentration der Zusatzstoffe die Herstellung und die Weiterverarbeitung derartiger Werkstoffe erschwert werden.

Es wird deshalb als eine Aufgabe der vorliegenden Erfindung angesehen, ein Verfahren zum Behandeln eines entflammbaren oder wasserempfindlichen Werkstoffs so auszugestalten, dass in einfacher Weise und mit möglichst geringen Kosten der Werkstoff schwer entflammbar oder wasserunempfindlich wird und eine nachträgliche Weiterverarbeitung möglich ist, bzw. eine Beschädigung seiner Oberfläche ohne größere Auswirkungen auf die mit der Behandlung angestrebten Eigenschaften des Werkstoffs ist.

Diese Aufgabe wird erfindungsgemäß durch ein Verfahren zum Imprägnieren gelöst, wobei der Werkstoff mindestens einmal mit dem Imprägnierungsmittel getränkt wird, bis das Imprägnierungsmittel den Werkstoff im wesentlichen vollständig durchdrungen und sich im Wesentlichen homogen innerhalb des Werkstoffs angelagert hat. Mit dem erfindungsgemäßen Verfahren können einerseits die Vorteile eines Imprägnierens des bereits hergestellten Werkstoffs mit einem flüssigen Imprägnierungsmittel beibehalten bzw. genutzt werden und kann andererseits gewährleistet werden, dass der Werkstoff im Wesentlichen homogene feuerhemmende und/oder wasserabweisende Eigenschaften aufweist. Der Werkstoff kann insbesondere nachträglich bearbeitet oder auch gegebenenfalls beschädigt werden, ohne dass die angestrebten feuerhemmenden oder wasserabweisenden Eigenschaften des Werkstoffs dadurch beeinträchtigt werden.

Erfindungsgemäß ist vorgesehen, dass im Vorfeld Wertetabellen für eine mit der Vorbehandlung geeignet vorgegebene Aufnahmefähigkeit ermittelt werden, zum Imprägnieren des Werkstoffs in einem ersten Verfahrensschritt eine Kenngröße des Ausgangsmaterials für die Aufnahmefähigkeit an Imprägnierungsmittel ermittelt wird, wobei die Kenngröße das Gewicht und/oder die Dichte und/oder der Feuchtigkeitsgehalt des Ausgangsmaterials sein kann, und dass in einem nachfolgenden Verfahrensschritt das Ausgangsmaterial mit dem die Aufnahmefähigkeit für das Imprägnierungsmittel beeinflussenden Homogenisierungsfluid derart vorbehandelt wird, dass eine vorgebbare Menge des Imprägnierungsmittels aufgenommen wird, wenn nachfolgend der vorbehandelte Werkstoff mit dem Imprägnierungsmittel getränkt wird. Auf diese Weise kann möglichst wenig Imprägnierungsmittel verwenden werden und dennoch weitestgehend sichergestellt werden, dass unabhängig von den Ausgangseigenschaften des im Einzelfall verwendeten Werkstoffs die angestrebten feuerhemmenden und/oder wasserabweisenden Eigenschaften durch die Imprägnierung erreicht werden. Im Gegensatz zu den aus der Praxis bekannten Imprägnierungsverfahren muss kein Überschuss an flüssigem Imprägnierungsmittel und insbesondere keine vollständige Sättigung des Werkstoffs mit dem flüssigen Imprägnierungsmittel erfolgen. Da oftmals das verwendete Imprägnierungsmittel einen maßgeblichen Anteil der für die Imprägnierung anfallenden Kosten verursacht, werden durch eine Einsparung bei der Menge des für die Imprägnierung erforderlichen Imprägnierungsmittels erhebliche Kosteneinsparungen bei der Imprägnierung und dadurch auch bei dem imprägnierten Endprodukt ermöglicht.

Durch die Vorbehandlung mit einem geeigneten Homogenisierungsfluid kann bei dem Ausgangsmaterial die Aufnahmefähigkeit für das Imprägnierungsmittel gezielt beeinflusst werden. Weist das verwendete Ausgangsmaterial zunächst unterschiedliche Eigenschaften auf, so dass bei Anwendung eines einheitlichen Imprägnierungsverfahrens unterschiedliche Endprodukte, bzw. Endprodukte mit unterschiedlichen Eigenschaften entstehen würden, so kann durch die Vorbehandlung die Aufnahmefähigkeit für das Imprägnierungsmittel in Abhängigkeit von den vorab ermittelten Eigenschaften des Ausgangsmaterials beeinflusst und homogenisiert werden, so dass eine gleichbleibend gute Imprägnierung der Endprodukte gewährleistet werden kann.

Auf diese Weise wird es erstmals möglich, als Ausgangsmaterial Recyclingstoffe, wie beispielsweise Altpapier etc., als Ausgangsmaterial für ein automatisiert durchführbares Herstellungsverfahren von imprägnierten Werkstoffen zu verwenden. Auf Grund der im Voraus nicht bekannten und sich ständig ändernden Zusammensetzung des Recyclingmaterials ändern sich die für eine Imprägnierung maßgeblichen Eigenschaften des Recyclingmaterials wie beispielsweise das Gewicht, die Dichte oder der Feuchtigkeitsgehalt des Recyclingmaterials ständig.

Für jedes beliebige Ausgangsmaterial können beispielsweise durch im Vorfeld durchgeführte Versuche Werte für eine geeignet vorgegebene Aufnahmefähigkeit für das Imprägnierungsmittel ermittelt werden, die in Abhängigkeit von dem Ausgangsmaterial und dessen Eigenschaften sowie in Abhängigkeit von dem verwendeten Homogenisierungsfluid und dem Imprägnierungsmittel sowie in Abhängigkeit von den angestrebten Eigenschaften des imprägnierten Werkstoffs bei der nachfolgenden Durchführung der Imprägnierung bei einer großen Menge des Ausgangsmaterials verwendet werden können, um jeweils zuverlässig die mit der Imprägnierung gewünschten Eigenschaften zu erzielen. Zu diesem Zweck können im Vorfeld Wertetabellen für eine mit der Vorbehandlung geeignet vorgegebene Aufnahmefähigkeit ermittelt werden.

Als Homogenisierungsfluid können beispielsweise Wasser oder wässrige Lösungen verwendet werden. Das Homogenisierungsfluid kann in geeigneter Konzentration Komponenten wie beispielsweise oberflächenaktive Substanzen enthalten, die das Eindringverhalten des Homogenisierungsfluids in das Ausgangsmaterial fördern oder Eindringhemmnisse wie beispielsweise verfestigte oder verdichtete Bereiche reduzieren oder beseitigen. Bei einem Ausgangsmaterial wie beispielsweise Papier oder Pappe können durch das Homogenisierungsfluid die Oberflächenspannung herabgesetzt werden, verhornte oder verbackene Partien gelöst und wasserabweisende Zusatzstoffe unterschiedlicher Konzentration in einem Recyclingmaterial kompensiert werden.

Um eine im Wesentlichen vollständige Durchdringung des Werkstoffs mit dem Imprägnierungsmittel zu unterstützen ist vorgesehen, dass eine wechselnde Druckbeaufschlagung vor und/oder während des Tränkens durchgeführt wird. Die Durchdringung des Werkstoffs mit dem flüssigen Imprägnierungsmittel kann beispielsweise durch einen zunächst vor oder zu Beginn des Tränkens deutlich verminderten Druck und durch eine während des Tränkens zunehmende oder kontinuierlich hohe Druckbeaufschlagung verbessert werden. Es kann je nach den Eigenschaften des zu imprägnierenden Werkstoffs sowie des verwendeten Imprägnierungsmittel auch zweckmäßig sein, während des Tränkens oder während mehrerer aufeinanderfolgender Eintauch- und Tränkvorgänge eine wechselnde Druckbeaufschlagung vorzunehmen oder in zeitlichen Abständen ein Vakuum zu erzeugen.

Gemäß einer Ausgestaltung des Erfindungsgedankens ist vorgesehen, dass der Werkstoff und/oder das Imprägnierungsmittel vor und/oder während des Tränkens einem elektrischen Feld ausgesetzt wird. Das elektrische Feld wirkt auf Ladungen in der Flüssigkeit und kann dadurch die Durchdringung des Werkstoffs mit dem flüssigen Imprägnierungsmittel vorteilhaft beeinflussen. Der Werkstoff und/oder das Imprägnierungsmittel können auch zusätzlich oder stattdessen elektrostatisch aufgeladen werden.

Gemäß einer vorteilhaften Ausgestaltung des Erfindungsgedankens ist vorgesehen, dass die Durchdringung des Werkstoffs mit dem Imprägnierungsmittel durch die Zugabe von grenzflächenaktiven Substanzen bzw. Netzmitteln bewirken, dass die Grenzflächenspannungen bzw. die Oberflächenspannung insbesondere des Imprägnierungsmittels herabgesetzt und dass Eindringen des Imprägnierungsmittels und das vollständige Durchdringen des Werkstoffs mit dem Imprägnierungsmittel erleichtert und beschleunigt wird.

Gemäß einer kostengünstigen und vorteilhaften Ausgestaltung des Erfindungsgedankens ist vorgesehen, dass die grenzflächenaktiven Substanzen dem Imprägnierungsmittel beigefügt sind.

Es ist ebenfalls denkbar, dass der Werkstoff vor dem Tränken mit dem Imprägnierungsmittel mit grenzflächenaktiven Substanzen vorbehandelt wird. Der Werkstoff kann beispielsweise vor dem Tränken mit dem Imprägnierungsmittel einmal oder mehrfach in ein vorzugsweise flüssiges Vorbehandlungsmittel eingetaucht werden, das im Wesentlichen grenzflächenaktive Substanzen enthält, die in dem Werkstoff angelagert werden. Bei dem anschließenden Tränken mit dem Imprägnierungsmittel kann dieses leichter in den Werkstoff eindringen und den Werkstoff vollständig durchdringen, um eine homogene Verteilung des Imprägnierungsmittels innerhalb des Werkstoffs zu ermöglichen.

Durch die Zugabe grenzflächenaktiver bzw. oberflächenaktiver Substanzen wird die Oberfläche des Werkstoffs für das Imprägnierungsmittel durchlässig. Das Eindringen und vollständige Durchdringen des Werkstoffs mit dem Imprägnierungsmittel wird durch Kapillarkräfte unterstützt, die bei den meisten Werkstoffen durch deren räumliche Struktur erzeugt bzw. begünstigt werden.

Es hat sich gezeigt, dass eine schnelle und homogene Einlagerung des Imprägnierungsmittels dadurch begünstigt wird, dass das Imprägnierungsmittel erwärmt wird. Untersuchungen haben ergeben, dass bei den untersuchten Imprägnierungsmitteln eine Erwärmung auf mehr als 30°C und bis zu 70°C vorteilhaft ist.

Gemäß einer besonders vorteilhaften Ausgestaltung des Erfindungsgedankens ist vorgesehen, dass die Gesamtaufnahme des Imprägnierungsmittels in Abhängigkeit von den angestrebten Eigenschaften des imprägnierten Werkstoffs vorgegeben wird. Im Gegensatz zu Werkstoffen, bei denen bereits vor oder während der Herstellung des Werkstoffs feuerhemmende oder wasserabweisende Zusatzstoffe zugegeben werden und die sich ergebenden Eigenschaften des Werkstoffs im Wesentlichen unveränderbar vorgegeben sind, kann mit dem erfindungsgemäßen Imprägnierungsverfahren die Gesamtaufnahme des Imprägnierungsmittels für jeden einzelnen Werkstoff bzw. für die einzelnen daraus hergestellten Bauteile vorgegeben werden.

In den meisten Anwendungsfällen sollen die imprägnierten Werkstoffe lediglich die für den jeweiligen Verwendungszweck maßgeblichen Anforderungen erfüllen und beispielsweise 30 Minuten, 60 Minuten oder 90 Minuten einem Feuer bzw. einer vorgegebenen Hitzeentwicklung standhalten können. In Abhängigkeit von den geforderten Widerstandseigenschaften muss eine geringe oder eine große Menge des Imprägnierungsmittels in dem Werkstoff eingelagert werden. Die in jedem Einzelfall erforderliche Menge kann experimentell ermittelt oder anhand von Erfahrungswerten abgeschätzt werden. Die Gesamtaufnahme des Imprägnierungsmittels kann an die angestrebten Eigenschaften des imprägnierten Werkstoffs angepasst und eine übermäßige Aufnahme und Einlagerung des Imprägnierungsmittels in dem Werkstoff verhindert werden, so dass die für die Imprägnierung erforderliche Zeitdauer und die für das Imprägnierungsmittel und den Imprägnierungsvorgang anfallenden Kosten möglichst gering gehalten werden können.

Es hat sich gezeigt, dass die für eine feuerhemmend wirksame Imprägnierung des Werkstoffs erforderliche Gesamtaufnahme des Imprägnierungsmittels in erheblichem Maße von dem Brennwert des zu imprägnierenden Werkstoffs abhängt. Je höher der Brennwert ist, umso größer muss der Anteil des Imprägnierungsmittels in dem imprägnierten Werkstoff sein, um ein Entzünden, bzw. Entflammen des Werkstoffs zuverlässig über den erforderlichen Zeitraum verhindern zu können. Aus diesem Grund ist vorgesehen, dass die Gesamtaufnahme des Imprägnierungsmittels in Abhängigkeit von dem Brennwert des zu imprägnierenden Werkstoffs vorgegeben wird. Zweckmäßigerweise steigt die erforderliche Gesamtaufnahme des Imprägnierungsmittels näherungsweise proportional in Abhängigkeit von dem Brennwert des zu imprägnierenden Werkstoffs. Dabei kann sowohl der materialspezifische massebezogene Brennwert als auch ein volumenbezogener Brennwert berücksichtigt werden, der bei gleichem Ausgangsmaterial im Wesentlichen von der räumlichen Ausgestaltung und Formgebung des Werkstoffes abhängt.

Vorzugsweise ist vorgesehen, dass ein in dem imprägnierten Werkstoff homogen verteilter Feststoffanteil des Imprägnierungsmittels mehr als 50 Gewichtsprozent, vorzugsweise mehr als 60 Gewichtsprozent des imprägnierten Werkstoffes beträgt. Untersuchungen haben ergeben, dass erst bei einer Einlagerung einer derart großen Menge an Imprägnierungsmittel, bzw. einem derart hohen Anteil des Imprägnierungsmittels an dem Gesamtgewicht des imprägnierten Werkstoffes die angestrebten Eigenschaften zuverlässig erreicht werden können. So kann beispielsweise durch Zugabe von mehr als 50 Gewichtsprozent eines geeigneten Imprägnierungsmittels erreicht werden, dass ein aus Papier hergestellter Werkstoff mit 80 mm Dicke auch nach 24 Stunden Wasserlagerung weniger als 2 Gewichtsprozent Wasser aufnimmt und dessen Druckfestigkeit kaum merklich reduziert wird. Bei einem aus Papier hergestellten Werkstoff mit 4 mm Dicke, der im Hinblick auf die geforderten mechanischen Eigenschaften weniger Papier enthält, reicht ersten Untersuchungen zufolge bereits eine Zugabe von 16 bis 22 Gewichtsprozent von dem Imprägnierungsmittel aus, um die gewünschten Eigenschaften zu erreichen.

Um gewährleisten zu können, dass der imprägnierte Werkstoff die angestrebten Eigenschaften aufweist und gegebenenfalls sicherheitsrelevante Anforderungen zuverlässig erfüllt, ist vorgesehen, dass nach einem Imprägnierungsvorgang die tatsächliche Aufnahme und/oder die homogene Verteilung des Imprägnierungsmittels zumindest stichprobenartig überprüft und gegebenenfalls eine Nachbehandlung mit dem Imprägnierungsmittel vorgenommen wird. Es wird als ein wesentlicher Vorteil gegenüber den bereits bekannten Imprägnierungsverfahren angesehen, dass mit dem erfindungsgemäßen Verfahren und der homogenen Einlagerung des Imprägnierungsmittels in dem Werkstoff eine wirksame Nachbehandlung überhaupt möglich ist.

Um beispielsweise die Druckfestigkeit zu erhöhen oder die Widerstandsfähigkeit gegenüber Wasser, Hitze oder Feuer zu verbessern oder aber die schalldämmenden Eigenschaften zu verbessern kann vorgesehen sein, dass Hohlräume in dem imprägnierten Werkstoff zusätzlich mit einer Isoliermasse mindestens teilweise verfüllt werden. Die Isoliermasse kann beispielsweise ein Gemisch aus anorganischen Stoffen und Faserstoffen sein. Es hat sich gezeigt, dass bei einem Mischungsverhältnis von etwa 25% bis 40%, vorzugsweise 30% bis 36% anorganischen Stoffen wie Vermiculit oder Perlit und etwa 60% bis 70% Fasermaterial wie beispielsweise Holzfasern oder Papierfasern gute Isolationseigenschaften erzielt werden können und die wasserabweisenden und feuerhemmenden Eigenschaften unterstützt, bzw. verbessert werden.

Die Erfindung betrifft auch einen imprägnierten Werkstoff, der erfindungsgemäß mit dem vorangehend beschriebenen Imprägnierungsverfahren imprägniert wurde. Der imprägnierte Werkstoff weist eine im Wesentlichen homogene Verteilung des Imprägnierungsmittels auf und ist deshalb unempfindlich gegenüber einer Beschädigung seiner Oberfläche. Aus dem Werkstoff können vor dessen Imprägnierung vorgefertigte Bauteile mit einer gegebenenfalls komplexen Formgebung hergestellt werden, die nach der Imprägnierung weiterverarbeitet und dabei auch hinsichtlich ihrer Abmessungen oder Formgebung verändert werden können.

Vorzugsweise ist vorgesehen, dass der imprägnierte Werkstoff einen Feststoffanteil des Imprägnierungsmittels von mehr als 50 Gewichtsprozent, vorzugsweise von mehr als 60 Gewichtsprozent des imprägnierten Werkstoffes aufweist. Falls der imprägnierte Werkstoff Ausnehmungen oder Hohlräume aufweist, ist erfindungsgemäß vorgesehen, dass diese Ausnehmungen oder Hohlräume zumindest teilweise mit einem Isoliermaterial verfüllt sind. Das Isoliermaterial enthält zweckmäßigerweise einen Anteil von 30% bis 40% anorganisches Material und einen Anteil von 60% bis 70% Faserstoffe.

Die Erfindung betrifft auch eine Leichtbauplatte und insbesondere eine rahmenlose Leichtbauplatte. Erfindungsgemäß ist vorgesehen, dass die Leichtbauplatte aus einer entflammbaren und/oder wasserempfindlichen Werkstoffplatte besteht, die mit einem vorangehend beschriebenen Verfahren mit einem Imprägnierungsmittel imprägniert wurde. Derartige Leichtbauplatten können zur Herstellung von Möbeln, als Türfüllungen, als Wand- und Deckenverkleidungen oder auch im Messebau, im Ladenbau sowie im Schiffs-, Fahrzeug- und Flugzeugbau verwendet werden.

Die Leichtbauplatte kann einseitig oder beidseitig eine Deckschicht aufweisen. Die einseitige Deckschicht bzw. die beidseitig angeordneten Deckschichten können eine optisch ansprechende Abdeckung darstellen. Es ist ebenfalls denkbar, eine Leichtbauplatte mit den gewünschten feuerhemmenden oder wasserabweisenden Eigenschaften als Trägermaterial für eine hochwertige Beschichtung zu verwenden, so dass die Platte bzw. das Bauteil aus Kostengründen nicht vollständig aus dem hochwertigen und damit teuren Material der Deckschicht hergestellt sein muss. Zudem kann bei Verwendung eines geeigneten Werkstoffs eine erhebliche Gewichtseinsparung erzielt werden, wobei die auf diese Weise hergestellte Leichtbauplatte dennoch die gewünschten feuerhemmenden und/oder wasserabweisenden Eigenschaften aufweisen kann. Als Deckschichten können z.B. marktübliche den Anforderungen entsprechende Holzwerkstoffplatten MDF (mitteldichte Holzfaserplatte oder mitteldichte Faserplatte), HDF (hochdichte Holzfaserplatte oder mitteldichte Faserplatte), Spanplatten oder Metall, wie Alu, Edelstahl oder Stahl und Kunstoffe verwendet werden. Desweiteren ist ebenfalls als Deckschicht ein HPL (High Pressure Laminate) in entsprechender Stärke möglich. Insbesondere für die Verwendung im Bau- bzw. Baunebengewerbe sind Deckschichten aus Gips oder Faserzementplatten vorteilhaft.

Weiterhin kann bei Verwendung einer Isoliermasse eine Verbesserung der Druckfestigkeit der Leichtbauplatten erzielt werden. Dies ist insbesondere vorteilhaft für die Verwendung der erfindungsgemäßen Leichtbauplatten im Baugewerbe, da hierdurch ein feuerhemmender und druckbeständiger Bauwerkstoff realisiert werden kann, der zudem durch sein geringes Gewicht einer verbesserten Verarbeitung zugänglich ist.

Für die erfindungsgemäßen Werkstoffe und insbesondere für derartige Leichtbauplatten ist vorgesehen, eine Zertifizierung nach DIN 4102 oder nach der EN-Norm zu erreichen.

Eine erfindungsgemäße Vorbehandlung eines Ausgangsmaterials, mit der zuverlässig die jeweils angestrebten Eigenschaften des anschließend imprägnierten Werkstoffs vorgegeben werden können, wird nachfolgend anhand von einigen Beispielen verdeutlicht.

Eine imprägnierte Leichtbauplatte aus Recyclingmaterial soll nach 24 Stunden Wasserlagerung im Rahmen eines standardisierten Prüfverfahrens einen Flächendruck von 4 Kg/cm2 aushalten können. Durch vorausgehende Untersuchungen konnte ermittelt werden, dass das noch nicht imprägnierte Ausgangsmaterial, bzw. die aus Recyclingmaterial hergestellte Leichtbauplatte etwa 110% Feuchtigkeit bezogen auf deren Darrgewicht aufnehmen kann. Ausgehend von einer nach einer vollständigen Trocknung verbleibenden Trockenmasse von 1000 g würde die Leichtbauplatte demzufolge etwa 1100 g Feuchtigkeit aufnehmen können. Weiterhin wurde experimentell ermittelt, dass für das vorgesehene Imprägnierungsmittel eine Menge von etwa 88% flüssigem Imprägnierungsmittel relativ zur Trockenmasse erforderlich ist, um die mit der Imprägnierung angestrebten Eigenschaften zu erreichen. Dieser Anteil ist abhängig von dem Feststoffgehalt des Imprägnierungsmittels, der nach einer anschließenden Trocknung in der imprägnierten Leichtbauplatte verbleibt und die angestrebten Imprägnierungseigenschaften bewirkt. Würde beispielsweise das flüssige Imprägnierungsmittel mehr Feststoffgehalt des Wirkstoffes als in dem vorliegenden Beispiel aufweisen, so könnte ein geringerer Anteil als 88 % bereits ausreichen.

Zunächst wird für jede noch zu imprägnierende Leichtbauplatte, deren Größe und damit deren Trockemasse bekannt ist, die tatsächliche Feuchte gemessen. In einem ersten Beispiel A beträgt die gemessene Feuchte 12 %, so dass sich bei einer Trockenmasse von 1000 g etw 120 g Feuchtigkeit in der Leichtbauplatte befinden. Bei einer Gesamtaufnahme von 1100 g Feuchtigkeit sollen 880 g Imprägnat aufgenommen werden. Mit einer Vorbehandlung werden deshalb zunächst 100 g Homogenisierungsfluid in die Leichtbauplatte eingebracht. Damit sind 120 g Feuchtigkeit und 100 g Homogenisierungsfluid unmittelbar vor der Imprägnierung in der Leichtbauplatte vorhanden, so dass bei einer Gesamtaufnahme von 1100 g nur noch 880 g Imprägnierungsmittel aufgenommen werden können.

Gemäß einem weiteren Beispiel B beträgt die Trockenmasse der Leichtbauplatte 1100 g und die tatsächliche Feuchte ebenfalls 12 %, was etwa 132 g Feuchtigkeit entspricht. Um bei einer Gesamtaufnahme von 1210 g die angestrebten Eigenschaften zu erreichen, werden zunächst 110 g Homogenisierungsfluid eingebracht, so dass anschließend noch 968 g Imprägnierungsmittel aufgenommen werden können, was einem Anteil von 88 % relativ zur Trockenmasse entspricht.

Bei einem weiteren Beispiel C soll mit der Imprägnierung lediglich eine geringere Widerstandsfähigkeit der Leichtbauplatte erreicht werden und die Leichtbauplatte nach 24 Stunden Wasserlagerung im Rahmen eines standardisierten Prüfverfahrens einen Flächendruck von 2,5 Kg/cm2 aushalten können. Hierfür ist gemäß vorausgegangenen Untersuchungen lediglich ein Anteil des Imprägnierungsmittels von etwa 75 % relativ zur Trockenmasse der Leichtbauplatte erforderlich. Die Trockenmasse dieser Leichtbauplatte beträgt 925 g. Die tatsächliche Feuchte der Leichtbauplatte beträgt bei diesem Beispiel 16 %, was 148 g gespeicherte Feuchtigkeit entspricht. Eine Gesamtaufnahme von 110% entspricht 1017,5 g Feuchtigkeit. Um die erforderliche Aufnahme von 689,5 g Imprägnierungsmittel vorgeben zu können, werden zusätzlich zu der tatsächlichen Feuchte durch die Vorbehandlung etwa 180 g Homogenisierungsfluid in die Leichtbauplatte eingebracht, bevor anschließend die Imprägnierung erfolgt.

Alle Angaben bei den vorangehend exemplarisch dargestellten Ausführungsbeispielen beziehen sich auf das jeweilige Gewicht. Die grundsätzlichen Eigenschaften wie beispielsweise der Aufnahmewert (110 %) bezogen auf das Darrgewicht oder der für eine vorgegebene Eigenschaft der Imprägnierung erforderliche Anteil des Imprägnierungsmittels relativ zu der Trockenmasse oder relativ zu dem Gesamtgewicht der imprägnierten Leichtbauplatte müssen für jeden Typ von Ausgangsmaterial, bzw. Werkstoff im Voraus ermittelt werden. Für jede zu imprägnierende Leichtbauplatte muss dann lediglich ein geeigneter Parameter wie beispielsweise der tatsächliche Feuchtigkeitsgehalt ermittelt werden, um durch die Vorbehandlung mit dem Homogenisierungsfluid in jedem Einzelfall präzise die anschließend noch mögliche Aufnahme des Imprägnierungsmittels vorgeben zu können.

Mit dem erfindungsgemäßen Verfahren kann sichergestellt werden, dass bei der Imprägnierung einer großen Anzahl von Leichtbauplatten bei jeder imprägnierten Leichtbauplatte die mit der Imprägnierung angestrebten Eigenschaften zuverlässig erreicht werden, ohne dass grundsätzlich eine größere Menge Imprägnierungsmittel als erforderlich verwendet werden muss, um insbesondere bei sicherheitsrelevanten Vorgaben den Ausschuss von nicht ausreichend imprägnierten Leichtbauplatten so gering wie möglich zu halten.

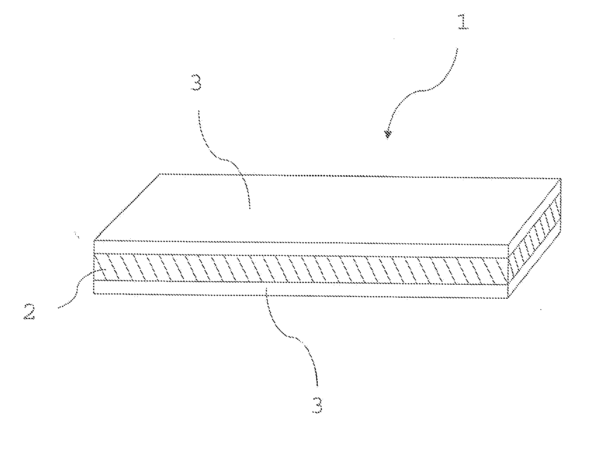

Nachfolgend wird ein weiteres Ausführungsbeispiel der Erfindung näher erläutert, das in der Zeichnung dargestellt ist.

Eine in der Figur dargestellte rahmenlose Leichtbauplatte 1 weist eine Platte 2 aus einem entflammbaren Werkstoff wie beispielsweise Papier oder Pappe auf. Die Platte 2 wurde mit einem geeigneten Imprägnierungsmittel getränkt, wobei das Imprägnierungsmittel die Platte 2 vollständig durchdrungen hat und im Wesentlichen homogen innerhalb der Platte 2 verteilt und darin dauerhaft angelagert ist. Die Platte 2 ist auf beiden Seiten mit einer Dekor-Deckschicht 3 beschichtet, die auf die Platte 2 aufgeklebt bzw. aufkaschiert ist.

Die Leichtbauplatte 1 ist rahmenlos ausgestaltet. Die Leichtbauplatte 1 ist auf Grund der homogenen Durchdringung der Platte 2 mit dem Imprägnierungsmittel dafür geeignet, im Rahmen einer weiteren Verarbeitung geschnitten oder zersägt oder mit Löchern versehen zu werden. Die durch die Imprägnierung bewirkten feuerhemmenden und/oder wasserabweisenden Eigenschaften der Leichtbauplatte 1 werden dadurch nicht beeinträchtigt.

Geeignete Imprägnierungsmittel beinhalten auf der Basis wässriger Lösungen eine oder mehrere Zusatzstoffe, welche die angestrebten feuerhemmenden und/oder wasserabweisenden Eigenschaften des imprägnierten Werkstoffs herbeiführen. Geeignete Zusatzstoffe sind beispielsweise Borsäure und/oder Metaborsäure und deren Salze, Phosphorsäure und/oder Meta- bzw. Polyphosphorsäure und deren Salze, wobei insbesondere Ammoniumsalze vorteilhaft erscheinen, sowie weitere Salze wie beispielsweise Ammoniumchlorid, Ammoniumsulfat, Natrium- oder Kaliumchlorid sowie Aluminiumsulfat. Dem Imprägnierungsmittel können weitere Zusatzstoffe wie beispielsweise Grenzflächen aktive Hilfsstoffe, nämlich Tenside oder aber Bindemittel wie beispielsweise Kunstharzlösungen oder Dispersionen beigefügt werden.

## Patentansprüche

1. Verfahren zum Imprägnieren eines entflammbaren oder wasserempfindlichen Werkstoffs mit einem flüssigen Imprägnierungsmittel, **dadurch gekennzeichnet, dass** der Werkstoff mindestens einmal mit dem Imprägnierungsmittel getränkt wird, bis das Imprägnierungsmittel den Werkstoff im Wesentlichen homogen durchdrungen und sich im Wesentlichen homogen innerhalb des Werkstoffs angelagert hat.

2. Verfahren nach Anspruch 1, **dadurch gekennzeichnet, dass** im Vorfeld Wertetabellen für eine mit einer Vorbehandlung mit einem Homogenisierungsfluid geeignet vorgebbare Aufnahmefähigkeit ermittelt werden, dass zum Imprägnieren des Werkstoffs in einem ersten Verfahrensschritt eine Kenngröße des Ausgangsmaterials für die Aufnahmefähigkeit an Imprägnierungsmittel ermittelt wird, wobei die Kenngröße das Gewicht und/oder die Dichte und/oder der Feuchtigkeitsgehalt des Ausgangsmaterials sein kann, und dass in einem nachfolgenden Verfahrensschritt das Ausgangsmaterial mit dem die Aufnahmefähigkeit für das Imprägnierungsmittel beeinflussenden Homogenisierungsfluid derart vorbehandelt wird, dass eine vorgebbare Menge des Imprägnierungsmittels aufgenommen wird, wenn nachfolgend der vorbehandelte Werkstoff mit dem Imprägnierungsmittel getränkt wird.

3. Verfahren nach Anspruch 1 oder Anspruch 2, **dadurch gekennzeichnet, dass** eine wechselnde Druckbeaufschlagung vor und/oder während des Tränkens durchgeführt wird.

4. Verfahren nach einem der vorangehenden Ansprüche, **dadurch gekennzeichnet, dass** der Werkstoff und/oder das Imprägnierungsmittel vor und/oder während des Tränkens einem elektrischen Feld ausgesetzt wird.

5. Verfahren nach einem der vorangehenden Ansprüche, **dadurch gekennzeichnet, dass** die Durchdringung des Werkstoffs mit dem Imprägnierungsmittel durch die Zugabe von grenzflächenaktiven Substanzen erleichtert wird.

6. Verfahren nach einem der vorangehenden Ansprüche, **dadurch gekennzeichnet, dass** das Imprägnierungsmittel erwärmt wird.

7. Verfahren nach einem der vorangehenden Ansprüche, **dadurch gekennzeichnet, dass** die Gesamtaufnahme des Imprägnierungsmittels in Abhängigkeit von den angestrebten Eigenschaften des imprägnierten Werkstoffs oder in Abhängigkeit von einem vorgebbaren Brennwert des zu imprägnierenden Werkstoffs vorgegeben wird.

8. Verfahren nach einem der vorangehenden Ansprüche, **dadurch gekennzeichnet, dass** ein in dem imprägnierten Werkstoff homogen verteilter Feststoffanteil des Imprägnierungsmittels mehr als 20 Gewichtsprozent, vorzugsweise mehr als 50 Gewichtsprozent und insbesondere vorzugsweise mehr als 60 Gewichtsprozent des imprägnierten Werkstoffes beträgt.

9. Verfahren nach einem der vorangehenden Ansprüche, **dadurch gekennzeichnet, dass** nach einem Imprägnierungsvorgang die tatsächliche Aufnahme und/oder die homogene Verteilung des Imprägnierungsmittels stichprobenartig überprüft und gegebenenfalls eine Nachbehandlung mit dem Imprägnierungsmittel vorgenommen wird.

10. Verfahren nach einem der vorangehenden Ansprüche, **dadurch gekennzeichnet, dass** Hohlräume in dem imprägnierten Werkstoff zusätzlich mit einer Isoliermasse mindestens teilweise verfüllt werden.

11. Imprägnierter Werkstoff, **dadurch gekennzeichnet, dass** ein entflammbarer und/oder wasserempfindlicher Werkstoff mit einem Verfahren gemäß einem der Ansprüche 1 bis 10 mit einem Imprägnierungsmittel imprägniert wirdund eine im Wesentlichen homogene Verteilung des Imprägnierungsmittels aufweist.

12. Imprägnierter Werkstoff nach Anspruch 11, **dadurch gekennzeichnet, dass** der imprägnierte Werkstoff einen Feststoffanteil des Imprägnierungsmittels von mehr als 50 Gewichtsprozent, vorzugsweise von mehr als 60 Gewichtsprozent des imprägnierten Werkstoffes aufweist.

13. Imprägnierter Werkstoff nach Anspruch 11 oder 12, **dadurch gekennzeichnet, dass** der imprägnierte Werkstoff Ausnehmungen oder Hohlräume aufweist, die zumindest teilweise mit einem Isoliermaterial verfüllt sind, wobei das Isoliermaterial einen Anteil von 30% bis 40% anorganisches Material und einen Anteil von 60% bis 70% Faserstoffe enthält.

14. Leichtbauplatte, **dadurch gekennzeichnet, dass** die Leichtbauplatte (1) aus einer entflammbaren und/oder wasserempfindlichen Werkstoffplatte (2) besteht, die aus einem Werkstoff besteht, der mit einem Verfahren gemäß einem der Ansprüche 1 bis 13 mit einem Imprägnierungsmittel imprägniert wurde.

15. Leichtbauplatte nach Anspruch 14, **dadurch gekennzeichnet, dass** die Leichtbauplatte (1) einseitig oder beidseitig eine Deckschicht (3) aufweist.
